# EUROPÄISCHE PATENTANMELDUNG

(11) **EP 1 361 383 A1**
(43) Veröffentlichungstag der Anmeldung: **12.11.2003**
(21) Anmeldenummer: 02025671.5
(22) Anmeldetag: 20.11.2002
(51) Int. Cl.: F16K 31/06, F02M 25/07

(54) **Magnetventil**

(30) Priorität: 10.05.2002 DE 10220719
(71) Anmelder: ROBERT BOSCH GMBH, 70442 Stuttgart (DE)
(72) Erfinder: Brendle, Matthias, 70563 Stuttgart (DE)

(57) **Zusammenfassung**

Es wird ein Magnetventil (10) vorgestellt, insbesondere ein pneumatisches Vorsteuerventil für Unterdruckdosen, mit einer Magnetspule (36), einem Magnetkern (32), einem stationären Bauelement (22) und einem zwischen zwei Endlagen beweglichen Bauelement (42), wobei das eine Bauelement (22, 42) mindestens einen Vorsprung (48) aufweist und wobei das andere Bauelement eine zum Vorsprung (48) komplementäre Ausnehmung aufweist, wobei die Ausnehmung (52) und der Vorsprung (48) in einer Endlage des beweglichen Bauelements (42) zusammenwirken und in der anderen Endlage voneinander beabstandet sind.

## Beschreibung

### Stand der Technik

Die Erfindung betrifft ein Magnetventil, insbesondere ein pneumatisches Vorsteuerventil für Unterdruckdosen, mit einer Magnetspule, einem Magnetkern, einem stationären Bauelement und einem zwischen zwei Endlagen beweglichen Bauelement.

Derartige Magnetventile zur Vorsteuerung von Unterdruckdosen werden in der Technik für eine Vielzahl von Anwendungsfällen eingesetzt. Sie finden insbesondere Anwendung in Abgassystemen von Brennkraftmaschinen, bei denen frische Ansaugluft mit Abgas versetzt und den Brennräumen einer Brennkraftmaschine zugeführt wird. Durch die Verwendung von Magnetventilen in einem solchen Abgassystem kann die Abgasmenge beeinflusst bzw. gesteuert werden, die der Brennkraftmaschine zugeführt wird.

Magnetventile, die zur Vorsteuerung von Unterdruckdosen in modernen Abgassystemen zum Einsatz kommen, können einen Tauchankermagneten oder einen Plattenankermagneten aufweisen. Tauchankermagnete sind innerhalb eines Magnetkörpers angeordnet und in diesem zumeist gleitend geführt. Plattenankermagnete sind endseitig an einem Magnetkern angeordnet. Diese Anordnung hat den Vorteil, dass zwischen Plattenankermagnet und Magnetkern sehr hohe Schließkräfte erzeugbar sind.

Ein Magnetventil mit einem Plattenankermagnet ist bspw. aus der EP 0 549 490 B1 bekannt. Dieses Magnetventil umfasst einen zentrischen Magnetkern, der von einer Magnetspule umgeben ist. Auf einer Endseite des Magnetkerns ist ein Plattenankermagnet angeordnet, in dem ein zentrisch angeordneter elastischer Ventilkörper aufgenommen ist. Der Ventilkörper weist Anschlagflächen auf, die jeweils im Mündungsbereich von angrenzenden Fluidkanälen ausgebildet sind.

Das in der EP 0 549 490 B1 beschriebene Magnetventil wird angesteuert, indem die Magnetspule mit Strom versorgt wird. Hierdurch wird ein umlaufender magnetischer Fluss erzeugt, der eine Schließkraft zwischen Plattenankermagnet und Magnetkern bewirkt. Der magnetische Fluss verläuft vom Magnetkern über den Plattenankermagnet und über ein Gehäuse wieder zum Magnetkern. Durch die Schließkraft bewegt sich der Plattenankermagnet zum Magnetkern hin, und der elastische Ventilkörper kommt an einer Anschlagfläche eines Fluidkanals in Anlage und verschließt diesen.

Das bekannte Magnetventil umfasst einen zylindrischen Unterbau, der konzentrisch zu und zwischen dem innen liegenden Magnetkern und dem außen liegenden Gehäuse des Magnetventils angeordnet ist. Von diesem Unterbau stehen als Finger ausgebildete Vorsprünge hervor, die der Führung des Plattenankermagneten dienen. Die Führungsfinger verlaufen parallel zur Längsachse des Magnetkerns und erstrecken sich vom Unterbau in Richtung des Plattenankermagneten und über diesen hinaus. Der Plattenankermagnet weist entlang seines Umfangs angeordnete Aussparungen auf, in die die Führungsfinger greifen. Diese Anordnung hat den Nachteil, dass der Plattenankermagnet leicht verkanten kann.

Ausgehend von diesem Stand der Technik ist es Aufgabe der Erfindung, ein besonders einfach herzustellendes Magnetventil zu schaffen, das sich durch hohe Zuverlässigkeit und Haltbarkeit auszeichnet.

Diese Aufgabe wird bei einem Magnetventil der eingangs beschriebenen Art erfindungsgemäß dadurch gelöst, dass das eine Bauelement mindestens einen Vorsprung aufweist und dass das andere Bauelement eine zum Vorsprung komplementäre Ausnehmung aufweist, wobei die Ausnehmung und der Vorsprung in einer Endlage des beweglichen Bauelements zusammenwirken und in der anderen Endlage voneinander beabstandet sind.

### Vorteile der Erfindung

Das erfindungsgemäße Magnetventil hat den Vorteil, dass seine Lebensdauer und Zuverlässigkeit hoch sind. Dies wird einerseits dadurch erreicht, dass in einer Endlage das bewegliche Bauelement in radialer Richtung gehalten ist, so dass die beim Betrieb eines Motors auftretenden radialen Schwingbeschleunigungen im Bereich von 30 bis maximal 60 g sicher aufgenommen werden können. Andererseits ist in der anderen Endlage'die freie Beweglichkeit des Bauelements gewährleistet, was einen zuverlässigen Betrieb des Magnetventils ermöglicht.

Das zwischen zwei Endlagen bewegliche Bauelement des Magnetventils ist in einer der Endlagen quer zur eigentlichen Bewegungsrichtung relativ zu dem stationären Bauelement des Magnetventils festgelegt. Hierzu weist das eine Bauelement mindestens einen Vorsprung auf, der senkrecht zu einer Hauptebene des Bauelements hervorsteht. Das andere Bauelement weist mindestens eine zum Vorsprung komplementäre Ausnehmung, Aussparung oder Vertiefung auf.

Zumindest in der Endlage, in der das bewegliche Bauelement mit dem stationären Bauelement zusammenwirkt, befindet sich der Vorsprung des einen Bauelements in dem durch die Ausnehmung gebildeten Hohlraum des anderen Bauelements. Dabei berühren sich die Oberfläche des Vorsprungs und die Oberfläche der Ausnehmung. Hierdurch sind die Bauelemente in zur Erstreckungsrichtung des Vorsprungs bzw. der Ausnehmung senkrechten Richtungen zueinander festgelegt.

Das bewegliche Bauelement kann sich in der besagten Endlage in einer zur Erstreckungsrichtung des Vorsprungs bzw. der Ausnehmung senkrechten Ebene also nicht mehr relativ zum festen Bauelement bewegen und gegen dieses oder gegen weitere Bauelemente stoßen. Durch solche Stöße würden die zum beweglichen Bauelement benachbarten Bauelemente des Magnetventils schnell verschleißen, was die Dauerhaltbarkeit des Magnetventils verringern würde. Darüber hinaus würden durch solche Stöße störende Geräusche erzeugt. Durch den vorgeschlagenen Aufbau des Magnetventils kann die Stoßbelastung und die Geräuschentwicklung vermieden oder zumindest verringert werden.

Das bewegliche und das stationäre Bauelement wirken nur in einer Endlage des beweglichen Bauelements zusammen. In der anderen Endlage des beweglichen Bauelements sind der Vorsprung und die Ausnehmung voneinander beabstandet. Das bewegliche Bauelement hat also mindestens in einer Endlage und solange keinen Berührkontakt mit Führungselementen, bis es diejenige Endlage einnimmt, in der es über den Vorsprung mit der Ausnehmung des stationären Bauelements zusammenwirkt. Hierdurch ist gewährleistet, dass ein Verkanten des beweglichen Bauelements wenigstens in der einen Endlage vermieden wird.

Der Vorsprung kann im beweglichen Bauelement und die zum Vorsprung komplementäre Ausnehmung, Aussparung oder Vertiefung im stationären Bauelement vorgesehen sein. Das bewegliche Bauelement kann auch eine Ausnehmung, Aussparung oder Vertiefung aufweisen, die komplementär zu einem Vorsprung ausgebildet ist, der im stationären Bauelement vorgesehen ist. Es können auch mehrere, jeweils zueinander komplementäre Vorsprünge und Ausnehmungen vorgesehen sein, um ein besonders zuverlässiges Festlegen der Bauelemente zueinander in einer Endlage des beweglichen Bauelements zu erreichen. Dabei kann das bewegliche Bauelement einen oder mehrere Vorsprünge und gleichzeitig einen oder mehrere Ausnehmungen aufweisen.

Besonders vorteilhafte Weiterbildungen und Ausführungsformen der Erfindung sind in Unteransprüchen angegeben.

Nach einer bevorzugten Ausführungsform der Erfindung umfasst das bewegliche Bauelement einen Magnetanker. Der Magnetanker kann entsprechend den Schaltstellungen des Magnetventils zwischen zwei Endlagen bewegt werden. In der bestromten Schaltstellung des Magnetventils befindet sich der Magnetanker in der zum Magnetkern benachbarten Endlage.' In dieser Endlage wird der Magnetanker durch die Magnetkraft am Magnetkern festgehalten. Hingegen befindet sich der Magnetanker in der unbestromten Schaltstellung des Magnetventils in der vom Magnetkern entfernten Endlage. In diese Endlage wird der Magnetanker meist über einen anliegenden Fluiddruck oder durch ein Vorspannelement gebracht. Durch die erfindungsgemäßen Vorsprünge bzw. Ausnehmungen wird der Magnetanker in dieser Endlage relativ zu stationären Bauelementen festgelegt. Beispielsweise weist der Magnetanker einen Vorsprung auf, der mit einer Ausnehmung eines stationären Bauelements zusammenwirkt, wenn der Magnetanker die vom Magnetkern beabstandete Endlage einnimmt.

Die Vorsprünge und/oder Ausnehmungen können durch Umformvorgänge in die Oberfläche des Magnetankers eingepresst werden. Beispielsweise kann der Magnetanker als Blechstanzteil ausgeführt sein, wobei während des Stanzvorgangs oder in einem folgenden Arbeitsgang Vorsprünge und/oder Ausnehmungen in die Oberfläche des Magnetankers geprägt werden.

In Ausgestaltung der Erfindung umfasst das stationäre Bauelement eine Abdeckung oder ein Gehäuseteil des Magnetventils. Durch die Abdeckung oder das Gehäuseteil kann ein Raum ausgebildet werden, in dem das bewegliche Bauelement aufgenommen und zwischen den zwei Endlagen bewegbar ist. In der Abdeckung oder im Gehäuseteil können erfindungsgemäße Vorsprünge bzw. Ausnehmungen auf einfache Art und Weise ausgebildet werden. Beispielsweise kann die Abdeckung oder das Gehäuseteil aus Kunststoff bestehen und als Spritzgussteil gefertigt sein.

Nach einer Ausführungsform der Erfindung ist der Vorsprung kegelstumpfförmig und die komplementäre Ausnehmung trichterförmig ausgebildet. Nach einer weiteren Ausführungsform der Erfindung ist der Vorsprung als Kugelabschnitt und die komplementäre Ausnehmung sphärisch ausgebildet. Eine zuverlässige Führung des beweglichen Bauelements in der Endlage, in der dieses mit einem stationären Bauelement zusammenwirkt ist sowohl durch die Ausführungsform mit Kegelstumpf und Trichter als auch durch die Ausführungsform mit Kugelabschnitt und sphärischer Ausnehmung gewährleistet.

Das bewegliche Bauelement wird über den Berührkontakt zwischen Vorsprüngen und Ausnehmungen in eine definierte Endlage gebracht. Die besondere Ausgestaltung der Vorsprünge als Kegel- oder Kugelabschnitte, die mit trichterförmigen oder sphärisch ausgebildeten Ausnehmungen zusammenwirken, ermöglicht ein Selbstzentrieren der Vorsprünge in den Ausnehmungen. Das bewegliche Bauelement kommt während der Bewegung aus einer ersten Endlage in eine zweite Endlage, in der es gegenüber dem stationären Bauelement festgelegt ist, zunächst nur in punktuellen Berührkontakt mit dem stationären Bauelement. Hierbei berühren sich die Vorsprünge und Ausnehmungen zunächst nur abschnittsweise, bspw. entlang eines Mantelabschnitts eines kegelstumpfförmigen Vorsprungs bzw. entlang eines Trichterabschnitts. Bei fortgesetzter Bewegung des beweglichen Bauelements wird durch die sich verjüngende Form des Kegel- bzw. Kugelabschnitts eine Zentrierung desselben in der trichterförmigen bzw. sphärischen Ausnehmung erreicht. Dabei ist ein Verkanten und somit Blockieren in allen Positionen des beweglichen Bauelements ausgeschlossen.

Nach einer weiteren Ausführungsform der Erfindung ist der Vorsprung zumindest abschnittsweise als Torus und die komplementäre Ausnehmung zumindest abschnittsweise rillenförmig ausgebildet. Hierdurch ist ein besonders zuverlässiges Festlegen des beweglichen Bauelements gegenüber dem stationären Bauelement gewährleistet.

Nach einer Variante der Erfindung ist ein Ventilkörper vorgesehen, der wenigstens bereichsweise den Vorsprung umfasst und/oder bildet. Dieser Ventilkörper wird bspw. vom Magnetanker getragen und dient dazu, benachbart zum Ventilkörper angeordnete Fluidkanäle zu verschließen bzw. zu öffnen. Wie oben bereits erläutert befindet sich der Magnetanker je nach Schaltstellung des Magnetventils in einer von zwei Endlagen. In der vom Magnetkern entfernten Endlage kann der Magnetanker relativ zu einem stationären Bauelement, z.B. einer Abdeckung oder einem Gehäusebauteil, festgelegt werden, indem der Ventilkörper in einer komplementär ausgebildeten Ausnehmung zur Anlage kommt. Beispielsweise ist der Ventilkörper als Kugel ausgebildet, die in einer sphärisch ausgebildeten Ausnehmung anliegt, wenn sich der Magnetanker in einer vom Magnetkern entfernten Endlage befindet.

Nach einer Weiterbildung der Erfindung ist vorgesehen, dass der Magnetkern mindestens auf der dem Magnetanker zügewandten Seite und/oder der Magnetanker auf der dem Magnetkern zugewandten Seite eine nicht magnetisierbare Oberflächenschicht aufweist. Durch eine solche Oberflächenschicht kann zwischen Magnetanker und Magnetkern ein Spalt ausgebildet werden, der verhindert, dass beim Wechsel vom bestromten in den unbestromten Zustand des Magnetventils der Magnetanker am Magnetkern haften bleibt. Ein solches Haften hätte zur Folge, dass das Magnetventil verzögert anspricht.

Die Oberflächenschicht kann durch nachträgliches Aufbringen zusätzlicher Materialschichten auf den Magnetkern oder auf den Magnetanker gebildet werden. Es ist aber auch möglich, den Magnetanker aus einem Ausgangsmaterial zu formen, das bereits eine Oberflächenschicht aufweist, die nicht magnetisierbar ist.

### Zeichnung

Nachfolgend wird ein besonders bevorzugtes Ausführungsbeispiel der Erfindung unter Bezugnahme auf die beiliegende Zeichnung im Detail erläutert. In der Zeichnung zeigen:
- Figur 1: einen Längsschnitt durch ein Magnetventil;
- Figur 2: einen Ausschnitt des Magnetventils gemäß Figur 1; und
- Figur 3: eine perspektivische Ansicht eines Magnetankers des Magnetventils von Figur 1.

### Beschreibung des Ausführungsbeispiels

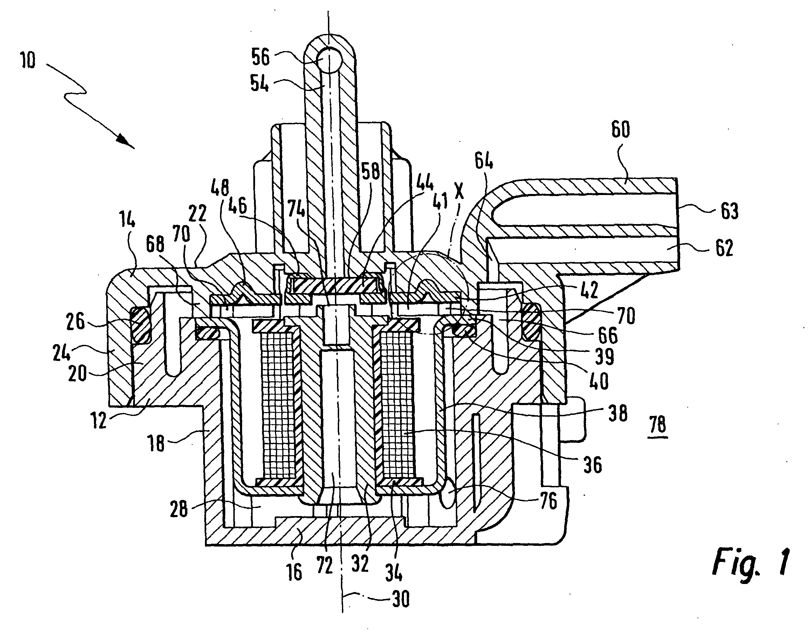

In Fig. 1 trägt ein Magnetventil insgesamt das Bezugszeichen 10. Das Magnetventil 10 umfasst ein insgesamt zylindrisches unteres Gehäuseelement 12 und ein insgesamt zylindrisches oberes Gehäuseelement 14. Das untere Gehäuseelement 12 weist einen kreisförmigen Bodenabschnitt 16 und einen an diesen angeformten, zylindrisch umlaufenden Wandabschnitt 18 auf. Das untere Gehäuseelement 12 weist ferner einen zum Wandabschnitt 18 in etwa koaxialen, von diesem beabstandeten und radial außen von diesem angeordneten zylindrisch umlaufenden Randabschnitt 20 auf, der gemäß Fig. 1 an den oberen Bereich des unteren Gehäuseelements 12 angeformt ist.

Das obere Gehäuseelement 14 weist einen Deckelabschnitt 22 sowie einen daran angrenzenden, zylindrisch umlaufenden Wandabschnitt 24 auf. Dessen Innenwand hat in etwa den gleichen Durchmesser wie die Außenwand des Randabschnitts 20 des unteren Gehäuseelements 12. Das untere Gehäuseelement 12 und das obere Gehäuseelement 14 sind über nicht dargestellte Rastmittel im Bereich zwischen dem Randabschnitt 20 des unteren Gehäuseelements 12 und dem Wandabschnitt 24 des oberen Gehäuseelements 14 schnappend miteinander verbunden. Sie sind über einen O-Ring 26 gegeneinander abgedichtet, der sich zwischen dem Randabschnitt 20 des unteren Gehäuseelements 12 und dem Wandabschnitt 24 des oberen Gehäuseelements 14 befindet.

Das untere Gehäuseelement 12 begrenzt mit seinem Bodenabschnitt 16 sowie mit seinem Randabschnitt 18 einen im Wesentlichen zylindrisch ausgebildeten Aufnahmeraum 28. In diesem Aufnahmeraum 28 sind koaxial zu einer zentrischen Achse 30 des Magnetventils 10 weitere Bauteile des Magnetventils 10 angeordnet. In der Mitte ist ein Magnetkern 32 erkennbar, der von einem Spulenkörper 34 umgeben ist. Der Spulenkörper 34 besteht aus Kunststoff und dient zur Aufnahme einer Magnetspule 36, die um den Spulenkörper 34 und um den Magnetkern 32 herum gewickelt ist. Der Magnetkern 32 ist an seinem in Fig. 1 unteren Ende mit einem rotationssymmetrisch ausgebildeten Magnettopf 38 verbunden.

Der Magnettopf 38 weist an seinem in Fig. 1 oben dargestellten Ende einen umlaufenden und radial nach außen weisenden Kragen 39 auf. Dieser stützt sich auf einen O-Ring 40, der den Kragen 39 gegen den Wandabschnitt 18 des unteren Gehäuseelements 12 abdichtet. Zwischen dem Kragen 39 des Magnettopfs 38, dem Spulenkörper 34 sowie dem Magnetkern 32 einerseits und dem Deckelabschnitt 22 des oberen Gehäuseelements 14 andererseits ist eine Schaltkammer 41 ausgebildet. In der Schaltkammer 41 ist ein im Wesentlichen zylindrischer, scheibenförmiger Magnetanker 42 angeordnet.

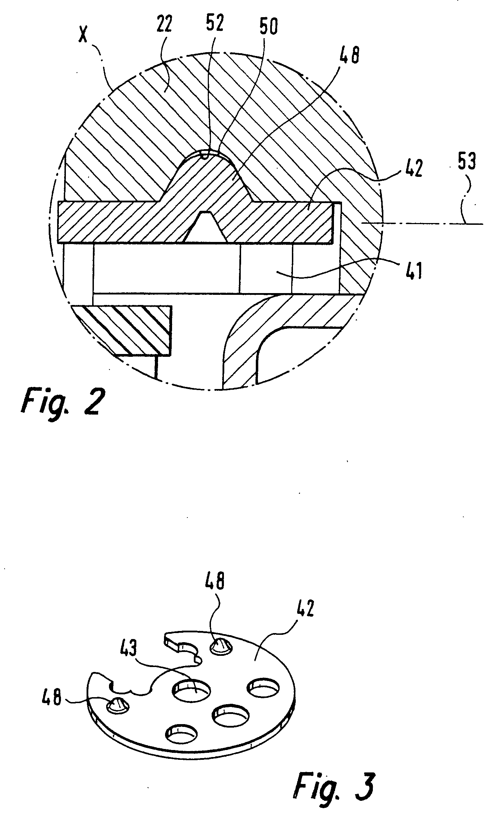

Der Magnetanker 42 ist in Fig. 3 einzeln perspektivisch dargestellt. Er weist eine zentrische Öffnung 43 auf, die von einer nur in Fig. 1 dargestellten Dichtscheibe 44 überdeckt ist. Die Dichtscheibe 44 besteht aus einem elastischen Material und ist auf dem Magnetanker 42 durch einen Haltekäfig 46 gehalten. Der Haltekäfig 46 ist mit dem Magnetanker 42 verschweißt. Der Magnetanker 42 weist auf seiner dem Deckelabschnitt 22 des oberen Gehäuseelements 14 zugewandten Seite Vorsprünge 48 auf (siehe auch Fig. 3).

Gemäß Fig. 2 sind die Vorsprünge 48 kegelstumpfförmig ausgebildet und weisen einen abgerundeten Kopfbereich 50 auf. Die kegelstumpfförmigen Vorsprünge 48 greifen in der in Fig. 2 dargestellten Endlage des Magnetankers 42 in Ausnehmungen 52 ein, die im Deckelabschnitt 22 des oberen Gehäuseelements 14 ausgebildet sind. Die Ausnehmungen 50 sind komplementär zu den Vorsprüngen 48 ausgebildet, so dass eine Relativbewegung zwischen dem Magnetanker 42 und dem Deckelabschnitt 22 des oberen Gehäuseelements 14 in einer Ebene 53 in der in Fig. 2 dargestellten Endlage des Magnetankers 42 nicht möglich ist. Die Ebene 53 verläuft senkrecht zur zentrischen Achse 30 des Magnetventils 10.

Die Fluidwege im Magnetventil 10 verlaufen folgendermaßen (unter Fluiden werden hier und nachfolgend gasförmige oder flüssige Strömungsmedien verstanden; vgl. Fig. 1):

Im Magnetventil 10 ist ein erster Fluidkanal 54 ausgebildet, der sich im Deckelabschnitt 22 des oberen Gehäuseelements 14 von der Schaltkammer 41 bis hin zu einem Anschluss 56 erstreckt. Der Fluidkanal 54 weist an seinem der Schaltkammer 41, zugewandten Ende einen Ventilsitz 58 auf.

Das Magnetventil 10 weist ferner einen Stutzen 60 auf, der seitlich am oberen Gehäuseelement 14 angeordnet ist. Der Stutzen 60 umfasst einen Fluidkanalabschnitt 62, der vom abstehenden Ende 63 des Stutzens 60 bis zu einem zweiten und zum ersten Fluidkanalabschnitt in etwa in einem rechten Winkel stehenden Fluidkanalabschnitt 64 verläuft. Der zweite Fluidkanalabschnitt 64 verläuft parallel zur zentrischen Achse 30 des Magnetventils 10 und mündet in einen Ringraum 66, der nach radial außen hin vom Randabschnitt 20 des unteren Gehäuseelements 12 begrenzt ist.

Der Deckelabschnitt 22 des oberen Gehäuseelements 14 weist in Richtung zum Kragen 39 des Magnettopfs 38 weisende Stege 68 auf. Zwischen den Stegen 68 sind Öffnungen 70 vorhanden, durch die die Schaltkammer 41 und der Ringraum 66 fluidisch miteinander verbunden sind.

Im Magnetkern 32 ist eine zentrische Magnetkernbohrung 72 vorgesehen, die sich von der Schaltkammer 41 bis zu einem dem Bodenabschnitt 16 des unteren Gehäuseelements 12 benachbarten Ende des Magnetkerns 32 hin erstreckt. Die Magnetkernbohrung 72 weist an ihrem der Schaltkammer 41 zugewandten Ende einen Ventilsitz 74 auf. Die Magnetkernbohrung 72 steht über den Aufnahmeraum 28 des unteren Gehäuseelements 12 fluidisch mit einer Entlüftungsöffnung 76 in Verbindung. Die Entlüftungsöffnung 76 ist im Wandabschnitt 18 des unteren Gehäuseelements 12 ausgebildet und verläuft vom Aufnahmeraum 28 durch den Wandabschnitt 18 hindurch und verbindet diesen mit der Außenatmosphäre 78.

Das Magnetventil 10 funktioniert folgendermaßen:

Das in Fig. 1 dargestellte Magnetventil 10 befindet sich im geschlossenen Ruhezustand. Dies bedeutet, dass die Magnetspule 36 unbestromt ist. Der Magnetanker 42 befindet sich in der in Fig. 1 dargestellten Endlage, in der er entweder durch den zwischen der Magnetkernbohrung 72 und dem Fluidkanal 54 herrschenden Differenzdruck oder über nicht dargestellte Rückstellmittel in Form einer Feder gehalten wird. Die Vorsprünge 48 des Magnetankers 42 greifen in die Ausnehmungen 52 im Deckelteil 22. Die Dichtscheibe 44 liegt am Ventilsitz 58 des Fluidkanals 54 an. Dies bedeutet, dass in der in Fig. 1 dargestellten Schaltstellung des Magnetventils 10 der Fluidkanal 54 und der Fluidkanal 62 durch die Dichtscheibe 44 voneinander getrennt sind.

Um das Magnetventil 10 aus dem Ruhezustand von Fig. 1 in einen Schaltzustand zu bringen, wird die Magnetspule 36 über nicht dargestellte elektrische Kontaktmittel bestromt. Durch die Bestromung wird ein Magnetkreis aufgebaut, der über den Magnetkern 32, den Magnetanker 42, den Kragen 39 des Magnettopfs 38 und über den Magnettopf 38 wieder zum Magnetkern 32 verläuft. Durch den Magnetkreis wird eine Schließkraft erzeugt, die den Magnetanker 42 zum Magnetkern 32 hin beaufschlagt. Hierdurch bewegt sich der Magnetanker 42 aus der in Fig. 1 dargestellten Endlage in eine zweite Endlage, in der der Magnetanker 42 an seinem äußeren Rand auf dem Kragen 39 des Magnettopfs 38 zur Auflage kommt. Dabei wird die Dichtscheibe 44 dichtend auf den Ventilsitz 74 der Magnetkernbohrung 72 gedrückt und dabei geringfügig verformt.

In dieser Schaltstellung des Magnetankers besteht zwischen dem Fluidkanal 54 und über die Schaltkammer 41, die Öffnungen 70 und den Ringraum 66 mit den Fluidkanalabschnitten 64 und 62 eine fluidische Verbindung. Hierdurch kann ein mit dem Fluidkanalabschnitt 62 verbundener Verbraucher mit Fluid versorgt werden. Der an den Fluidkanalabschnitt 62 angeschlossene Verbraucher kann bei Anliegen von Vakuum am Fluidkanal 54 bzw. am Anschluss 56 auch evakuiert werden.

## Patentansprüche

1. Magnetventil (10), insbesondere pneumatisches Vorsteuerventil für Unterdruckdosen, mit einer Magnetspule (36), einem Magnetkern (32), einem stationären Bauelement (22) und einem zwischen zwei Endlagen beweglichen Bauelement (42), **dadurch gekennzeichnet, dass** das eine Bauelement (22, 42) mindestens einen Vorsprung (48) aufweist und dass das andere Bauelement eine zum Vorsprung (48) komplementäre Ausnehmung (52) aufweist, wobei die Ausnehmung (52) und der Vorsprung (48) in einer Endlage des beweglichen Bauelements (42) zusammenwirken und in der anderen Endlage voneinander beabstandet sind.

2. Magnetventil (10) nach Anspruch 1, **dadurch gekennzeichnet, dass** das bewegliche Bauelement (42) einen Magnetanker umfasst.

3. Magnetventil (10) nach einem der vorhergehenden Ansprüche, **dadurch gekennzeichnet, dass** das stationäre Bauelement (22) eine Abdeckung oder ein Gehäuseteil des Magnetventils (10) umfasst.

4. Magnetventil (10) nach einem der vorhergehenden Ansprüche, **dadurch gekennzeichnet, dass** der Vorsprung (48) kegelstumpfförmig und die komplementäre Ausnehmung (52) trichterförmig ausgebildet ist.

5. Magnetventil (10) nach einem der vorhergehenden Ansprüche, **dadurch gekennzeichnet, dass** der Vorsprung (48) als Kugelabschnitt und die komplementäre Ausnehmung (52) sphärisch ausgebildet ist.

6. Magnetventil (10) nach einem der vorhergehenden Ansprüche, **dadurch gekennzeichnet, dass** der Vorsprung (48) zumindest abschnittsweise als Torus und die komplementäre Ausnehmung (52) zumindest abschnittsweise rillenförmig ausgebildet ist.

7. Magnetventil (10) nach einem der vorhergehenden Ansprüche, **dadurch gekennzeichnet, dass** ein Ventilkörper vorgesehen ist, der wenigstens bereichsweise den Vorsprung umfasst und/oder bildet.

8. Magnetventil (10) nach einem der vorhergehenden Ansprüche, **dadurch gekennzeichnet, dass** der Magnetkern (32) mindestens auf der dem Magnetanker (42) zugewandten Seite und/oder der Magnetanker (42) auf der dem Magnetkern (32) zugewandten Seite eine nicht magnetisierbare Oberflächenschicht aufweist.
